# NEUE EUROPÄISCHE PATENTSCHRIFT

(11) **EP 1 714 059 B2**
(45) Veröffentlichungstag und Bekanntmachung des Hinweises auf die Entscheidung über den Einspruch: **30.03.2011**
(45) Hinweis auf die Patenterteilung: 30.05.2007
(21) Anmeldenummer: 05715292.8
(22) Anmeldetag: 10.02.2005
(51) Int. Cl.: F16J 15/08

(54) **METALLISCHE ZYLINDERKOPFDICHTUNG**
METALLIC CYLINDER HEAD GASKET
JOINT DE CULASSE METALLIQUE

(30) Priorität: 10.02.2004 DE 102004006483
(43) Veröffentlichungstag der Anmeldung: 25.10.2006
(73) Patentinhaber: REINZ-Dichtungs-GmbH, 89233 Neu-Ulm (DE)
(72) Erfinder: SAILER, Albrecht, 89233 Neu-Ulm (DE); SCHNEIDER, Jürgen, 89188 Merklingen (DE); RUESS, Bernd, 89269 Vöhringen (DE)
(74) Vertreter: Pfenning, Meinig & Partner GbR
(86) Internationale Anmeldenummer: PCT/EP2005/001348
(87) Internationale Veröffentlichungsnummer: WO 2005/078322

(56) Entgegenhaltungen:
- EP-A2- 0 230 804
- EP-A2- 0 306 766
- DE-A1- 19 548 237
- DE-A1- 19 809 755
- DE-U1- 20 121 984
- DE-U1- 20 121 984
- US-A- 5 568 932
- US-A- 5 639 101
- US-A- 5 690 342
- US-A- 5 690 342
- US-A1- 2003 127 805

## Beschreibung

Die Erfindung betrifft eine metallische Flachdichtung aus mindestens zwei metallischen Lagen aus Federstahl, wobei mindestens eine Lage einen die mindestens eine Durchgangsöffnung umgebenden Stopper und eine dem Stopper zugeordnete Sicke aufweist und mindestens eine zweite Lage eine Sicke und benachbart zur Sicke eine Kröpfung besitzt. Ebenso betrifft die Erfindung eine metallische Flachdichtung aus mindestens drei metallischen Lagen, wobei mindestens zwei Lagen aus Federstahl gebildet sind und in einer inneren Lage mindestens ein die mindestens eine Durchgangsöffnung umgebender Stopper und in den beiden an diese innere Lage angrenzenden Lagen jeweils eine dem mindestens einen Stopper zugeordnete Sicke angeordnet ist und die beiden an die innere Lage angrenzenden Lagen benachbart zur Sicke jeweils eine Kröpfung besitzen.

Die metallischen Flachdichtungen sind insbesondere Zylinderkopfdichtungen, können aber auch Dichtungen im Ansaug- Auspuff- oder Turboladerbereich sein. Die metallischen Flachdichtungen dienen dabei insbesondere zur Abdichtung von Brennraumdurchgängen oder Flanschen. Im Folgenden werden derartige Abdichtungsbereiche als Durchgangsöffnungen bezeichnet.

Bei metallischen Flachdichtungen ist es bekannt, benachbart zur Sicke einen Stoppers anzuordnen. Die Aufgabe des Stoppers, auch Verformungsbegrenzer genannt, besteht darin, ein vollständiges Zusammendrücken der Sicke zu verhindern, so dass die durch die Sicke verursachte Dichtwirkung nicht beeinträchtigt wird. Üblicherweise bestehen derartige Flachdichtungen aus mehreren metallischen Lagen. Im Stand der Technik sind dabei Laminate von metallischen Flachdichtungen bekannt, die aus mehreren metallischen Dichtungslagen insbesondere aus Federstahl bestehen und bei denen zwischen den metallischen Lagen noch eine Distanzlage angeordnet sein kann, die nicht aus Federstahl bestehen muss.

Für Flachdichtungen aus mindestens zwei metallischen Lagen aus Federstahl, bei denen in einer Lage eine Sicke und ein Stopper angeordnet sind, besteht jedoch das Problem, dass hierdurch keine symmetrische Aufteilung der Stopperhöhe auf alle Lagen erfolgt. Die Sicken befinden sich hier in unterschiedlichen Verpressungszuständen, was ungewollte Spannungen verursacht und im schlimmsten Fall zu Rissbildungen führen kann. Lösungen mit mindestens zwei Stopperlagen, die zu einer symmetrischen Aufteilung der Stopperhöhe führen würden, sind in ihrer Herstellung sehr aufwendig und vor allem sehr teuer, so dass sie aus wirtschaftlichen Gesichtspunkten keine Lösung darstellen.

Aufgabe der vorliegenden Erfindung ist es deshalb, eine metallische Flachdichtung vorzuschlagen, bei der eine symmetrische Aufteilung der Stopperhöhe auf die einzelnen Lagen erfolgt und die gleichzeitig in ihrer Herstellung kostengünstig ist.

Die Aufgabe der vorliegenden Erfindung wird durch die Merkmale der Patentansprüche 1, 2 oder 3 gelöst. Die von diesen Ansprüchen abhängigen Ansprüche zeigen vorteilhafte Weiterbildungen auf.

Erfindungsgemäß wird vorgeschlagen, dass bei metallschen Flachdichtungen, die aus mindestens zwei Lager aus Federstahl bestehen, in mindestens einer dieser Lagen benachbart zur Sicke zusätzlich mindestens einseitig eine Kröpfung ausgebildet ist. Durch das Einbringen dieser Kröpfung in die Federstahllage wird nun eine symmetrische Aufteilung der Stopperhöhe auf jede Lage erreicht. Zur Erzielung einer optimalen Vergleichmäßigung im eingebauten Zustand ist es dabei günstig, wenn im unverbauten Zustand der durch die Kröpfung gebildete Versatz der Lage kleiner ist als die mittlere Bauhöhe der Sicken.

In einer Weiterbildung der erfindungsgemäßen metallischen Flachdichtung besteht diese aus mindestens drei metallischen Lagen, wobei eine innere, bevorzugt die mittlere, Lage einen die Durchgangsöffnung umgebenden Stopper aufweist und wobei dem Stopper eine Sicke zugeordnet ist. Hierbei werden Halbsicken, bevorzugt aber Vollsicken eingesetzt. Mindestens zwei der mindestens drei metallischen Lagen bestehen aus Federstahl, die Materialwahl der Stopperlage hängt von der Wahl des Stopperelements ab.

Die Kröpfung befindet sich immer außerhalb des Stopperbereichs der benachbarten Lagen oder zwischen Stopperbereich der benachbarten Lagen und Sicke.

Die erfindungsgemäße Flachdichtung kann selbstverständlich in der Weise weitergebildet werden, dass noch mehr als zwei Lagen als Dichtungslagen aus Federstahl vorhanden sind. So kann die metallische Flachdichtung mindestens eine weitere Lage aus Federstahl aufweisen oder auch, wie an und für sich aus dem Stand der Technik schon bekannt, zusätzlich noch Distanzlagen, die nicht aus Federstahl bestehen.

Wesentlich bei der erfindungsgemäßen metallischen Flachdichtung ist, dass zumindest zwei Lagen aus Federstahl vorhanden sind, wobei in einer Lage eine Sicke und mindestens eine der Sicke zugeordnete Kröpfung angeordnet sind und in der zweiten Lage aus Federstahl eine Sicke und ein Stopper. Bei mehr als zwei Lagen können Sicke und Stopper auf zwei Lagen verteilt sein; die Lage, die nur den Stopper enthält muss nicht aus Federstahl gebildet sein.

Bei der erfindungsgemäßen metallischen Flachdichtung nach einem der Ansprüche 1 und 2 ist ein Stopper eingesetzt, der durch einen separaten Ring, eine separate Ringscheibe oder durch Einbringen einer Wellen-, Sägezahn oder Trapezform in die metallische Lage gebildet sein kann. Bevorzugt ist hierbei insbesondere die letztgenannte Ausführungsform, d.h. diejenige, bei der der Stopper in einer Wellen-, Sägezahn oder Trapezform ausgebildet ist. Bei Verwendung eines separaten Rings oder einer separaten Ringscheibe als Stopper, kann sich dieser zudem auf der tieferen Seite einer abgesetzten Stufe in der Stopperlage befinden.

Bei der erfindungsgemäßen metallischen Flachdichtung nach Anspruch 3 ist ein Stopper eingesetzt, der durch Einbringen, vorzugsweise einer Wellen-, Sägezahn oder Trapezform in die metallische Lage gebildet ist.

Befindet sich der Stopper in einer Lage ohne Sicke, so ist es möglich, den Stopper durch Umfalzen oder Stauchen diese metallische Lage, die nicht aus Federstahl besteht, zu bilden.

In einer Dichtung mit einer geraden Anzahl Lagen mit Sicke entspricht die Bauhöhe der mindestens einen Kröpfung näherungsweise der Hälfte der Höhe des Stoppers, in einer Dichtung mit einer ungeraden Anzahl Lagen mit Sicke näherungsweise einem Drittel der Höhe des Stoppers.

Selbstverständlich kann die Kombination der Profilierungen Sicke, Stopper und Kröpfung nicht nur für die Abdichtung von Durchgangsöffnungen, sondern auch für die Abdichtung im Hinterland von metallischen Flachdichtungen z.B. für die Aussenkante sowie für Fluid- und Schraubenlöcher verwendet werden. Auch hier können neben Vollsicken auch Halbsicken verwendet werden. Die jeweiligen Profilierungen können bei gleichzeitigem Einsatz an Durchgangsöffnungen und im Hinterland in den verschiedenen Einsatzbereichen unterschiedlich gestaltet werden.

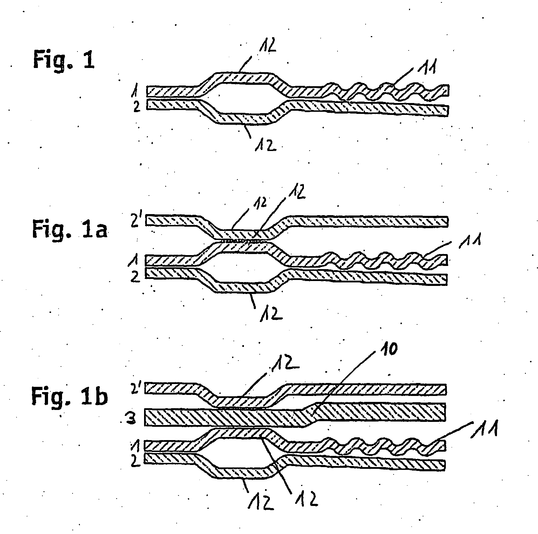

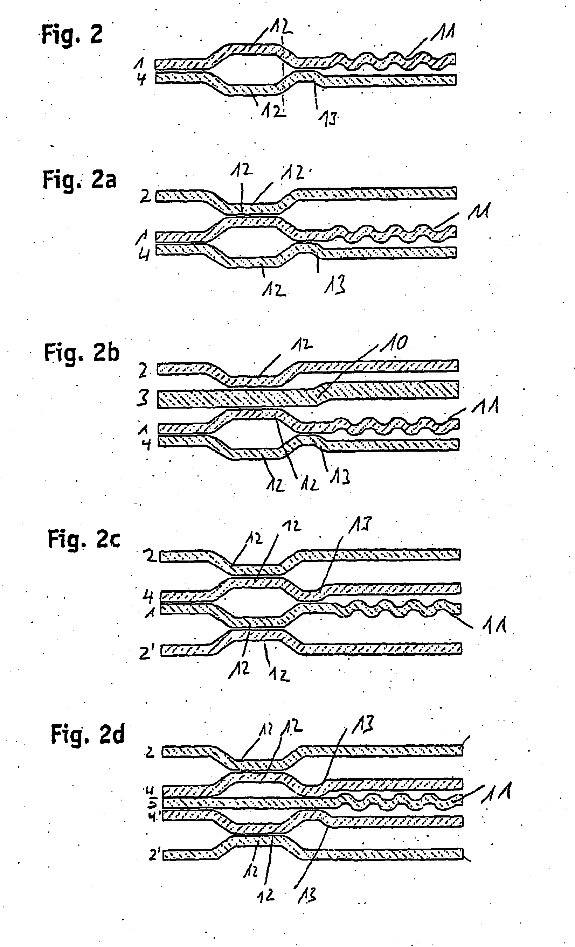

Die Erfindung wird nachfolgend anhand der Figuren 1 und 2 näher erläutert.
Fign. 1, 1a und 1 b
   zeigen drei verschiedene Aufbauten von metallischen Flachdichtungen des Standes der Technik,
Fign. 2 bis 2d
   zeigen fünf verschiedene erfindungsgemäße Lösungen von metallischen Flachdichtungen.

Es werden durchgängig dieselben Bezugszeichen für äquivalente Funktionen verwendet.

In Fig. 1 ist ein schematischer Querschnitt durch eine metallische Flachdichtung abgebildet, die aus den beiden Federstahllagen (1, 2) besteht. Die Federstahllage 1 weist dabei eine Vollsicke 12 und einen Stopper 11 in Form einer Welle auf. Die Lage 2 enthält nur eine Vollsicke 12.

In Fig. 1a ist ein schematischer Querschnitt durch eine metallische Flachdichtung abgebildet, die aus drei metallischen Lagen aus Federstahl (2, 1, 2') besteht. Die mittlere Lage 1 weist einen Stopper 11 in Form einer Welle auf und eine Vollsicke 12. Die Lagen 2 und 2' weisen gestapelt zur Vollsicke 12 der Lage 1 ebenfalls Vollsicken 12 auf.

In Fig. 1b ist eine analoge Konstruktion gezeigt, bei der lediglich noch ein Distanzblech 3 mit abgesetzter Stufe 10 vorhanden ist. Hier findet trotz der abgesetzten Stufe 10 im Distanzblech 3 keine symmetrische Verteilung der Stopperhöhe statt; die Sicke in der Lage 2 ist nicht optimal abgestoppt.

Dadurch, dass nun bei diesen Flachdichtungsausführungen des Standes der Technik nur ein Stopperelement 11 in einer Lage 1 aus Federstahl angeordnet ist, kommt es zu keiner symmetrischen Verteilung der Stopperhöhe auf die einzelnen Lagen 1, 2 bzw. 1, 2, 2' oder 1, 2, 2' und 3. Die Sicken befinden sich bei diesen Konstruktionen also in unterschiedlichen Arbeitsbereichen, was ungewollte Spannungen zur Folge hat und im schlimmsten Fall zu Rissbildungen führen kann.

Fig. 2 zeigt eine erfindungsgemäße Ausgestaltung der metallischen Flachdichtung. Der Aufbau der metallischen Flachdichtung nach Fig. 2 entspricht dem, wie er bereits in Fig. 1 beschrieben worden ist. Die metallische Flachdichtung nach der Fig. 2 besteht somit aus zwei Lagen aus Federstahl 1 und 4. Auch bei der metallischen Flachdichtung nach der Fig. 2 ist der Stopper 11 in Form einer Welle in ein Dichtungsblech aus Federstahl eingebracht. Die erfindungsgemäße metallische Flachdichtung nach der Ausführungsform der Fig. 2 zeichnet sich nun dadurch aus, dass benachbart zur Sicke 12 in der Lage 4 eine Kröpfung 13 in das Blech aus Federstahl eingebracht ist. Dadurch wird nun eine Vergleichmäßigung der Stopperhöhe auf die einzelnen Dichtungsbleche aus Federstahl 1 und 4 erreicht.

In Fig. 2a ist eine weitere Ausführungsform dargestellt, die im Wesentlichen der aus Fig. 2 entspricht, jedoch weist diese Ausführungsform noch zusätzlich eine Sickenlage 2 auf.

In Fig. 2b ist eine weitere Ausführungsform dargestellt, die im Wesentlichen der aus Fig. 2a entspricht, jedoch weist diese Ausführungsform noch zusätzlich ein Distanzblech 3 mit abgesetzter Stufe 10 auf. Durch die Kröpfung 13 wird eine gleichmäßige Verteilung der Stopperhöhen erzielt.

Bei der Ausführungsform nach der Fig. 2c ist die metallische Flachdichtung aus vier metallischen Lagen aus Federstahl 2, 4, 1 und 2' aufgebaut. In der metallischen Lage 1 ist analog den Fign. 1, 1a und 1b ein Stopper 11 einer Sicke 12 zugeordnet. Bei der Ausführungsform nach der Fig. 2c ist nun die metallische Lage 4 aus Federstahl auf der metallischen Lage 1 angeordnet und weist wiederum eine erfindungsgemäße Kröpfung 13 auf. Das Paket aus den Lagen 1 und 4 ist dabei von den metallischen Lagen 2 und 2', die jeweils wieder Sicken aufweisen, eingeschlossen. Auch diese Ausführungsform nach der Fig. 2c zeichnet sich nun dadurch aus, dass eine gleichmäßige Verteilung der Stopperhöhe auf die einzelnen Lagen erfolgt.

In der Fig. 2d ist eine weitere Ausführungsform dargestellt, die aus insgesamt fünf Lagen besteht. Hier ist die Stopperlage 5 ohne Sicke ausgebildet und wird von Sickenlagen 4 und 4', die jeweils eine erfindungsgemäße Kröpfung 13 aufweisen, eingeschlossen. Zusätzlich weist der symmetrische Dichtungsaufbau zwei Sickenlagen 2 und 2' auf. Auch in dieser Ausführungsform erfolgt eine gleichmäßige Verteilung der Stopperhöhe auf die einzelnen Lagen.

## Patentansprüche

1. Metallische Flachdichtung mit mindestens einer Durchgangsöffnung aus mindestens zwei metallischen Lagen (1, 2, 2', 4, 4') aus Federstahl, wobei in einer ersten Lage (1) mindestens ein die Durchgangsöffnung umgebender Stopper (11) und eine dem Stopper (11) zugeordnete Sicke (12) und in der mindestens einen zweiten Lage (4) eine Sicke (12) angeordnet ist, und wobei in der mindestens einen zweiten Lage (4) benachbart zur Sicke (12), zwischen Stopperbereich und Sicke (12) in der ersten Lage (1, 2, 2', 4, 4') mindestens eine Kröpfung ausgebildet ist
**dadurch gekennzeichnet, dass** die Bauhöhe der mindestens einen Kröpfung näherungsweise 1/(2n+2) mal der Höhe des Stoppers entspricht, mit n dem nicht-ganzzahligen Teil der Zahl, die entsteht, wenn die Anzahl der Dichtungslagen, die eine Sicke aufweisen, durch 2 geteilt wird.

2. Metallische Flachdichtung mit mindestens einer Durchgangsöffnung aus mindestens drei metallischen Lagen (1, 2, 2', 4, 4', 5), wobei mindestens zwei Lagen (2, 2', 4, 4') aus Federstahl bestehen und in einer inneren Lage (1, 5) mindestens ein die Durchgangsöffnung umgebender Stopper (11), und in einer ungeraden Anzahl von Lagen einschließlich der beiden an dieser inneren Lage (1, 5) angrenzenden Lagen (4, 4') jeweils eine dem mindestens einen Stopper (11) zugeordnete Sicke (12) angeordnet ist und wobei in den beiden an die innere Lage (1, 5) angrenzenden Lagen (4, 4') benachbart zur Sicke (12) zwischen Stopperbereich und Sicke (12) jeweils mindestens eine Kröpfung (13) ausgebildet ist,
**dadurch gekennzeichnet, dass** die Bauhöhe der mindestens einen Kröpfung näherungsweise 1/(2n+2) mal der Höhe des Stoppers entspricht, wobei n dem nicht-ganzzahligen Teil der Zahl entspricht, die entsteht, wenn die Anzahl Dichtungslagen, die eine Sicke aufweisen, durch 2 geteilt wird.

3. Metallische Flachdichtung mit mindestens einer Durchgangsöffnung aus mindestens drei metallischen Lagen (1, 2, 2', 4, 4', 5), wobei mindestens zwei Lagen (2, 2', 4, 4') aus Federstahl bestehen und in eine innere Lage (1, 5) mindestens ein die Durchgangsöffnung umgebender Stopper (11) eingebracht ist, in einer geraden Anzahl von Lagen einschließlich der beiden an dieser inneren Lage (1, 5) angrenzenden Lagen (4, 4') jeweils eine dem mindestens einen Stopper (11) zugeordnete Sicke (12) angeordnet ist und wobei in den beiden an die innere Lage (1, 5) angrenzenden Lagen (4, 4') benachbart zur Sicke (12) zwischen Stopperbereich und Sicke (12) jeweils mindestens eine Kröpfung (13) ausgebildet ist,
wobei die Bauhöhe der mindestens einen Kröpfung näherungsweise 1/(2n+2) mal der Höhe des Stoppers entspricht, wobei n dem nicht-ganzzahligen Teil der Zahl entspricht, die entsteht, wenn die Anzahl Dichtungslagen, die eine Sicke aufweisen, durch 2 geteilt wird.

4. Metallische Flachdichtung nach einem der vorhergehenden Ansprüche,
**dadurch gekennzeichnet, dass** im unverpressten Zustand der durch die mindestens eine Kröpfung (13) gebildete Versatz der Lage kleiner als die mittlere Bauhöhe der Sicken (12) ist.

5. Metallische Flachdichtung nach einem der Ansprüche 2 und 3,
**dadurch gekennzeichnet, dass** die Sicken (12) der mindestens zwei Lagen (1, 2, 2', 4, 4') übereinander angeordnet sind.

6. Metallische Flachdichtung nach einem der vorhergehenden Ansprüche,
**dadurch gekennzeichnet, dass** sie eine weitere Lage (3) in Form eines Distanzbleches aufweist.

7. Metallische Flachdichtung nach einem der vorhergehenden Ansprüche,
**dadurch gekennzeichnet, dass** der Stopper (11) durch Einbringung einer Wellen-, Sägezahn- oder Trapezform gebildet ist.

8. Metallische Flachdichtung nach einem der Ansprüche 1 und 2,
**dadurch gekennzeichnet, dass** der Stopper (11) durch einen separaten Ring oder eine separate Ringscheibe gebildet ist.

9. Metallische Flachdichtung nach einem der Ansprüche 1 und 2,
**dadurch gekennzeichnet, dass** der Stopper (11) durch Umfalzen oder Stauchen gebildet ist.

10. Metallische Flachdichtung nach einem der vorhergehenden Ansprüche,
**dadurch gekennzeichnet, dass** die Höhe des Stoppers (11) zwischen 0,04 und 0,25 mm liegt.

11. Metallische Flachdichtung nach einem der vorhergehenden Ansprüche,
**dadurch gekennzeichnet, dass** die Höhe des Stoppers (11) zwischen 0,07 und 0,20 mm liegt.

12. Metallische Flachdichtung nach einem der Ansprüche 1 bis 11,
**dadurch gekennzeichnet, dass** die metallische Flachdichtung eine Zylinderkopfdichtung ist.

13. Metallische Flachdichtung nach einem der Ansprüche 1 bis 11,
**dadurch gekennzeichnet, dass** die metallische Flachdichtung eine Dichtung im Ansaug-, Auspuff- oder Turboladerbereich ist.

## Claims

1. Metallic flat gasket having at least one through opening consisting of at least two metallic spring steel layers (1, 2, 2', 4, 4'), wherein at least one stopper (11) surrounding the through opening and one bead (12) associated with the stopper (11) are arranged in a first layer (1) and a bead (12) is arranged in the at least one second layer (4), and wherein in the at least one second layer (4) at least one bend is formed adjacent to the bead (20) between the stopper region and the bead (12) in the first layer (1, 2, 2', 4, 4'), **characterised in that** the height of the at least one bend approximately corresponds to 1/(2n+2) times the height of the stopper with n being the non-integer part of the number which results when the number of sealing layers which have a bead is divided by 2.

2. Metallic flat gasket having at least one through opening consisting of at least three metallic layers (1, 2, 2', 4, 4', 5), wherein at least two layers (2, 2', 4, 4') consist of spring steel and in an inner layer (1, 5) at least one stopper (11) surrounding the through opening is arranged and in an odd number of layers including both layers (4, 4') adjoining this inner layer (1, 5) in each case a bead (12) associated with the at least one stopper (11) is arranged, and wherein in both layers (4, 4') adjoining the inner layer (1, 5) in each case at least one bend (13) is formed adjacent to the bead (12) between the stopper region and the bead (12), **characterised in that** the height of the at least one bend approximately corresponds to 1/(2n+2) times the height of the stopper, with n being the non-integer part of the number which results when the number of sealing layers which have a bead is divided by 2.

3. Metallic flat gasket having at least one through opening consisting of at least three metallic layers (1, 2, 2', 4, 4', 5), wherein at least two layers (2, 2', 4, 4') consist of spring steel and in an inner layer (1, 5) at least one stopper (11) surrounding the through opening is arranged and in an even number of layers including both layers (4, 4') adjoining this inner layer (1, 5) in each case a bead (12) associated with the at least one stopper (11) is arranged, and wherein in both layers (4, 4') adjoining the inner layer (1, 5) in each case at least one bend (13) is formed adjacent to the bead (12) between the stopper region and the bead (12), **characterised in that** the height of the at least one bend approximately corresponds to 1/(2n+2) times the height of the stopper, with n being the non-integer part of the number which results when the number of sealing layers which have a bead is divided by 2.

4. Metallic flat gasket according to any one of the preceding claims, **characterised in that** in the unpressed state the offset of the layer formed by the at least one bend (13) is smaller than the average height of the beads (12).

5. Metallic flat gasket according to any one of claims 2 and 3, **characterised in that** the beads (12) of the at least two layers (1, 2, 2', 4, 4') are arranged one on top of the other.

6. Metallic flat gasket according to any one of the preceding claims, **characterised in that** it has another layer (3) in the form of a spacer plate.

7. Metallic flat gasket according to any one of the preceding claims, **characterised in that** the stopper (11) is formed by introducing a wave-shaped part, a saw-tooth shaped part or a trapezoidal-shaped part.

8. Metallic flat gasket according to any one of claims 1 and 2, **characterised in that** the stopper (11) is formed by a separate ring or a separate ring disc.

9. Metallic flat gasket according to at least one of claims 1 and 2, **characterised in that** the stopper (11) is formed by crimping or compressing.

10. Metallic flat gasket according to any one of the preceding claims, **characterised in that** the height of the stopper (11) is between 0.04 and 0.25 mm.

11. Metallic flat gasket according to any one of the preceding claims, **characterised in that** the height of the stopper (11) is between 0.07 and 0.20 mm.

12. Metallic flat gasket according to any one of the preceding claims, **characterised in that** the metallic gasket is a cylinder head gasket.

13. Metallic flat gasket according to any one of the preceding claims, **characterised in that** the metallic gasket is a gasket in the intake area, exhaust area or turbocharger area.

## Revendications

1. Joint métallique plat, ayant au moins une ouverture de passage, constitué d'au moins deux couches métalliques (1,2,2', 4,4') en acier à ressort, dans lequel sont aménagées, dans une première couche (1), au moins une butée (11) entourant l'ouverture de passage et une moulure (12) associée à la butée (11) et, dans la au moins une deuxième couche (4), une moulure (12), et dans lequel est formé, dans la au moins une deuxième couche (4), au moins un coude adjacent à la moulure (12), entre la zone de butée et la moulure (12) dans la première couche (1, 2, 2', 4,4'), **caractérisé en ce que** la hauteur du au moins un coude correspond approximativement à 1/(2n+2) fois la hauteur de la butée, n étant la partie non entière du nombre que l'on obtient lorsque le nombre de couches du joint qui présente une moulure est divisé par 2.

2. Joint métallique plat ayant au moins une ouverture de passage, constitué d'au moins trois couches métalliques (1,2,2', 4,4', 5), dans lequel au moins deux couches (2, 2', 4, 4') sont constituées d'acier à ressort et dans lequel sont aménagées dans une couche interne (1,5), au moins une butée (11) entourant l'ouverture de passage et, dans un nombre impair des couches incluant les deux couches (4, 4') contiguës à cette couche interne (1, 5), respectivement, une moulure (12) associée à la au moins une butée (11), et dans lequel est formé, dans les deux couches (4, 4') contiguës à la couche interne (1, 5), respectivement, au moins un coude (13) adjacent à la moulure (12) entre la zone de la butée et la moulure (12), **caractérisé en ce que** la hauteur du au moins un coude correspond approximativement à 1/(2n+2) fois la hauteur de la butée, n étant la partie non entière du nombre que l'on obtient lorsque le nombre de couches du joint qui présente une moulure est divisé par 2.

3. Joint métallique plat ayant au moins une ouverture de passage, constitué d'au moins trois couches métalliques (1,2,2', 4,4', 5), dans lequel au moins deux couches (2, 2', 4, 4') sont constituées d'acier à ressort et dans lequel sont aménagées dans une couche interne (1, 5), au moins une butée (11) entourant l'ouverture de passage et, dans un nombre pair des couches incluant les deux couches (4, 4') contiguës à cette couche interne (1, 5), respectivement, une moulure (12) associée à la au moins une butée (11), et dans lequel est formé, dans les deux couches (4, 4') contiguës à la couche interne (1, 5), respectivement, au moins un coude (13) adjacent à la moulure (12) entre la zone de la butée et la moulure (12), **caractérisé en ce que** la hauteur du au moins un coude correspond approximativement à 1/(2n+2) fois la hauteur de la butée, n étant la partie non entière du nombre que l'on obtient lorsque le nombre de couches du joint qui présente une moulure est divisé par 2.

4. Joint métallique plat selon l'une quelconque des revendications précédentes, **caractérisé en ce que** le déport de la couche formé par l'au moins un coude (13) est, à l'état non comprimé, plus petit que la hauteur moyenne des moulures (12).

5. Joint métallique plat selon l'une quelconque des revendications 2 et 3, **caractérisé en ce que** les moulures (12) des au moins deux couches (1, 2, 2', 4, 4') sont aménagées l'une au-dessus de l'autre.

6. Joint métallique plat selon l'une quelconque des revendications précédentes, **caractérisé en ce qu'**il présente une autre couche (3) sous la forme d'une tôle d'écartement.

7. Joint métallique plat selon l'une quelconque des revendications précédentes, **caractérisé en ce que** la butée (11) est formée par l'introduction d'une forme ondulée, en dents de scie ou en trapèze.

8. Joint métallique plat selon l'une quelconque des revendications 1 et 2, **caractérise en ce que** la butée (11) est formée par un anneau séparé, un disque annulaire séparé.

9. Joint métallique plat selon au moins une quelconque des revendications 1 et 2, **caractérisé en ce que** la butée (11) est formée par sertissage ou refoulement.

10. Joint métallique plat selon l'une quelconque des revendications précédentes, **caractérise en ce que** la hauteur de la butée (11) se situe entre 0,04 et 0,25 mm.

11. Joint métallique plat selon l'une quelconque des revendications précédentes **caractérisé en ce que** la hauteur de la butée (11) se situe entre 0,07 et 0,20 mm.

12. Joint métallique plat selon l'une quelconque des revendications précédentes, **caractérise en ce que** le joint métallique plat est un joint de culasse.

13. Joint métallique plat selon l'une quelconque des revendications précédentes **caractérise en ce que** le joint métallique plat est un joint d'étanchéité dans le secteur de l'admission, de l'échappement ou de la turbo compression.
